# EUROPEAN PATENT SPECIFICATION

(11) **EP 0 622 018 B1**
(45) Date of publication and mention of the grant of the patent: **26.08.1998**
(21) Application number: 94303049.4
(22) Date of filing: 27.04.1994
(51) Int. Cl.: A01K 1/035

(54) **Dual-layered cushion for pets**
Doppelschichtiges Lager für Haustiere
Coussin à double couche pour animaux

(30) Priority: 28.04.1993 US 53429
(43) Date of publication of application: 02.11.1994
(73) Proprietor: UNIVIER INTERNATIONAL CORPORATION, New York, New York 10048 (US)
(72) Inventor: McMahon, Franklin Duncan, New York, New York 10021 (US)
(74) Representative: Goodenough, Nigel

(56) References cited:
- EP-A- 0 465 810
- DE-U- 8 617 064
- FR-A- 1 326 155
- US-A- 5 002 014

## Description

### BACKGROUND OF THE INVENTION

### Field of the Invention

The invention relates to cushions for pets, and is directed more particularly to the orthopedic support of dogs at rest and especially, toward accommodating the instinctive and epimeletic (self-care) behavior exhibited by dogs known as the "bedding-down" or "nesting" instinct, while simultaneously achieving the secondary goal of lessening the destructive effects of pets on household furniture.

### Background of the Invention

Dogs exhibit a definite pattern of epimeletic behavior prior to resting, called the "bedding-down" or "nesting" instinct ("instinct" being understood here as the taking of an action automatically, without premeditation and without prior learning of the action). The bedding-down instinct is generally characterized by the animal circling two or three times on one spot and digging at the ground with the forepaws or nose, giving the appearance of creating an imaginary hole.

There is no consensus among experts as to the origin of this behavior and what it achieves. Whitney (Leon Whitney, D.V.M., in Dog Psychology - The Basis of Dog Training, publ. Chas. C. Thomas, 1964) hypothesizes that the dog's forebears, living as they did in grasslands, had to make nests in the grass by turning around and trampling out a bed for themselves. A related theory contends that this action was meant to scare away snakes and scorpions (mentioned but disputed by Eberhard Trumler, Understanding Your Dog, publ. Faber & Faber, 1973). Neither hypothesis, however, can explain the existence of the instinct in all breeds regardless of their origin.

Vine (Louis L. Vine, D.V.M., Behavior and Training of Dogs and Puppies, publ. Arco Publishing, 1977) contends that the circling motion was more likely an effort to detect the direction of the wind before bedding down so that by placing the nose in an up-wind direction, the dog could more readily detect the scent of approaching enemies. This explanation of the behavior is also rejected by many experts, some of whom favor a less Darwinian explanation. For instance, one authority contends that cats and dogs are inherently comfort-loving creatures and will attempt to create a softer nest by pawing the ground. This behavior is exhibited in the wild by wolves and feral dogs who often seek out a tree with exposed roots and rearrange the leaves before bedding down in them. Additionally, all domesticated animals, with the exception of horses, sleep in a curled-up position, which helps them to thermoregulate, and the turning motion may, as hypothesized by Kurt F. Konig (reported by Trumler, op. cit.), be an action designed to achieve the correct curvature of the spine. Similar behavior is exhibited by the coyote, which digs a circular nest in the ground into which it curls up to sleep, as well as the husky and other snow breeds which do the same in the snow.

The dog or cat owner may seek to accommodate this instinctive behavior and ensure the animal's comfort by providing a mattress or cushion. This is particularly important for medium-size and large dogs, which are prone to developing sores on the skin of the elbow, hock and stifle from lying on hard surfaces. The development of sores as well as certain orthopedic problems can be avoided through the use of an appropriately elastic mattress or cushion. In addition, by providing a comfortable resting place, the owner can reduce or eliminate damage to household furniture resulting from the animal's instinctive bedding-down sequence of turning and digging and from oil from the animal's coat coming into contact with the upholstery.

While it would be desirable for there to be a mattress or cushion which accommodates the instinctual behavior as well as physical needs and predilections of companion animals, as far as the inventor is aware, none of the mattresses and cushions now in existence accommodates all of the following:
1) the bedding-down instinct characterized by circling and digging;
2) the nature of dogs and cats to seek the softest resting place; and
3) the need for a resting animal to receive uniform but elastic support in order to avoid orthopedic problems and bedsores.

There are two main types of cushions for pets in existence. The first, similar in many respects to mattresses for human use, consists chiefly of a layer of polyurethane foam of varying thicknesses and degrees of compressibility, covered with a layer of fabric. The second type consists of a circular or rectangular textile cavity filled to varying degrees with small pieces of compressible material or fibrous material, or a combination of small pieces of elastic material and a similarly compressible material such as polyester or cotton batting. Patent specification EP-A-0465810 discloses a mattress which combines the structures of these two types of cushion. However, the mattress disclosed is designed for use by humans rather than animals and for the primary purpose of satisfying the needs of patients afflicted with certain types of illness or infirmity.

The advantage of a cushion of the first type is that such a cushion will maintain its shape due to its firmness, thereby providing the pet with a more or less even cushioned support at all points across its surface. The disadvantage of such a cushion, however, is that the single uninterrupted layer structure does not accommodate the instinctive behaviour of the dog to dig at and rearrange the bedding before settling in the curled-up sleeping position.

The second type of cushion is more pliable. Due to its loose structure, the dog is able to satisfy its instinctive behaviour to rearrange its bedding and can enjoy a particularly soft resting place. Such a cushion, however, tends to be amorphous and to lose its shape easily, thereby failing to provide the pet with adequate, even support across its surface. Such a cushion is disclosed in patent specification DE-U-8617064. The cushion of document DE-U-8617064 is believed to be the closest piece of prior art to the present invention. Those technical features which are common to both the present invention and the cushion of DE-U-8617064 are defined in the preamble of claim 1.

It would be desirable to provide companion animals with a mattress or cushion that not only is sufficiently pliable and fluid to indulge their natural instincts, but that also maintains its shape and provides an optimal degree of support to the pet at all points across its surface.

### SUMMARY OF THE INVENTION

It is therefore the object of this invention to provide such a cushion.

According to the present invention, the cushion comprises two distinct layers secured to one another: (1) a base layer, or substratum, comprising preferably a single uninterrupted layer of material with some but not excessive compressibility or elasticity; and (2) a second layer, or superstratum, comprising preferably a relatively loosely-packed cavity containing a highly compressible, movable, amorphous material (such as loosely-packed down, polyester batting or small polystyrene beads) or a combination of such materials.

The second layer is supported by the base layer, and may be attached to the base layer over the entire surface of either or both layers, or at selected points. In certain embodiments, the second layer rests on top of the base layer.

In other embodiments, the second layer is within and supported from below by the base layer, where the top surface of the base layer provides a basin-like cavity receiving and preferably surrounding the second layer.

It is intended that the two mentioned layers preferably be enclosed in a single outer casing. However, variations are allowed, and the second layer may be a separately-encased attachment to the firm substratum.

In all embodiments attachment is effected by any suitable method.

The foregoing and other features and advantages of the invention will be more fully appreciated from a consideration of the ensuing detailed description of the preferred embodiments, taken in conjunction with the accompanying drawings.

### BRIEF DESCRIPTION OF THE DRAWINGS

Fig. 1 is a perspective view of a first preferred embodiment;
Fig. 1A is a side view, partly in section, of the embodiment of Fig. 1;
Fig. 2 is a perspective view of a second preferred embodiment; and
Fig. 2A is a sectional view of the embodiment of Fig. 2.

### DETAILED DESCRIPTION OF THE PREFERRED EMBODIMENTS

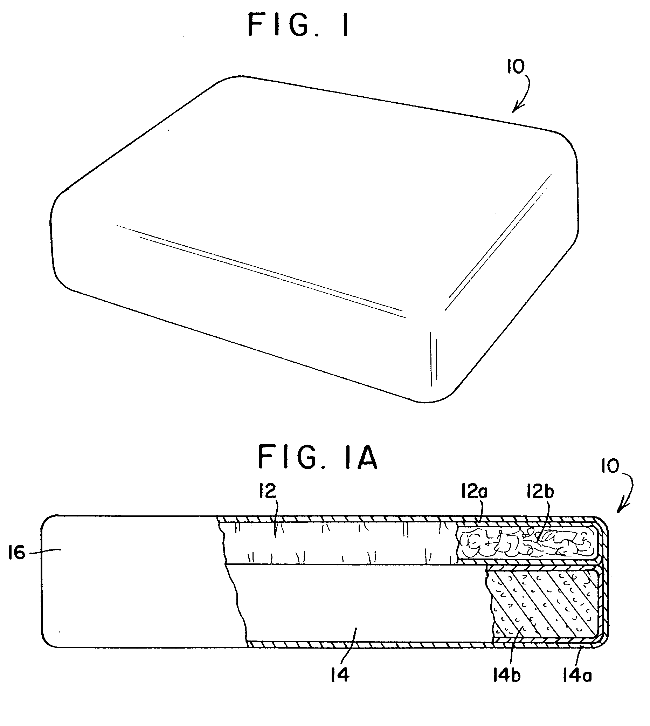

As shown generally in Fig. 1, the overall appearance of the first preferred embodiment 10 is similar to that of a conventional cushion or mattress, being of roughly uniform thickness and having any overall shape (in this figure, illustratively shown as rectangular). The cushion is entirely covered by an outer casing 16.

As shown in the partial sectional view of Fig. 1A, the cushion 10 comprises an upper layer or superstratum 12 and a lower or base layer 14. In the version shown in Fig. 1A, each of these layers is encased in its own cover 12a, 14a which may be of any suitable conventionally available material. The cover 12a of the superstratum contains a fill 12b of such material, at such density, as will make the superstratum 12 highly compressible and easily pliable. Examples of such materials are Hollofil® (commercially available from Dupont Chemical Company; Hollofil® is a registered trademark of that company) or a similar polyester batting, and goose or duck down. Alternatively, polystyrene beads may be used either alone or in combination with another suitable material. The fill 12b is relatively loosely packed, so that the superstratum 12 is suitably compressible and pliable, and its shape can be rearranged to some degree.

The base layer 14 is relatively densely packed (or otherwise filled) with a material 14b which is preferably only somewhat compressible. Examples of suitable materials are cotton batting and kapok. This layer 14 is packed (or otherwise filled) sufficiently densely to give it a distinct form and shape and make it feel firm to the touch. While the base layer 14 can be compressed with moderate pressure of the hand, such pressure will not permanently change the shape of the base layer in this preferred embodiment.

In the base layer 14, thus, the density of the packing or fill 14b cooperates with the cover 14a to maintain the shape of the base layer. In the superstratum 12, in contrast, the shape is maintained only by the outer covering 12a, and only to a limited extent. More specifically, the packing in the superstratum 12 is preferably such that an animal engaging in typical canine or feline bedding-down behavior could disturb the shape of the superstratum 12 and substantially rearrange the distribution of fill 12b within the cover 12a in the absence of the base layer 14. In actual use pursuant to the invention, however, the superstratum 12 is secured to the base layer 14, by any suitable means. The two respective casings 12a, 14a of the two layers may for example be sewn together or may be attached to each other using snaps, loop-and-hook fabric, buttons, zippers or the like. The attachment of the superstratum to the base layer serves to limit but not eliminate the disturbance of the shape of the superstratum 12 by an animal bedding down on the latter. Typically, the attachment means (not shown) will be located roughly around the periphery of the cushion 10, optionally with additional points of attachment toward the center.

As a result of the two layers 12, 14 being connected in this fashion, the superstratum 12 retains a high degree of compressibility, but the firmness of the base layer 14 prevents an animal from disturbing the overall shape of the superstratum 12 to a significant extent. Because the upper layer 12, and more specifically its inner covering 12a, is held in place by its attachment to the base layer 14, the animal has only a limited ability to push the fill 12b of the upper layer 12 around so much as to concentrate the fill excessively in some areas while depleting other portions of the superstratum of fill. As a result, an animal sleeping on the cushion 10 of the embodiment of Figs. 1 and 1A is able to engage in its bedding-down behavior, to arrange its sleeping place in a comfortable way and to be assured of proper, even support for all parts of its body.

The outer casing 16 of the embodiment of Figs. 1 and 1A is preferably removable for easy cleaning. It may, for example, be provided with a zipper or with a row of buttons or other suitable fasteners (loop-and-hook material, snaps, etc.) for easy removal and easy securing in place. Also, the outer casing 16, while preferably a single layer (as illustrated), could include a separate inner layer holding the superstratum 12 and base layer 14 permanently, and an outer layer which alone would be removable for cleaning. It will be appreciated that the outer casing can be provided with a decorated surface if desired.

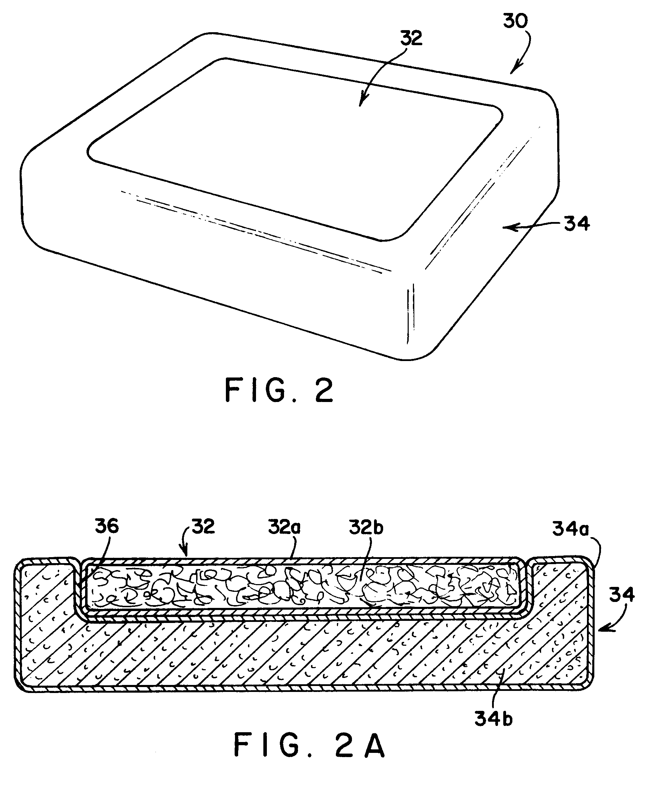

Figs. 2 and 2A show another embodiment 30, in which the base layer 34 is formed with a recess 36 in its upper surface, and the superstratum 32 is received in the recess 36. In this embodiment, the cover 32a of the superstratum 32 is preferably secured permanently to the base layer 34, although this need not be the case and the two layers 32, 34 could instead be formed separately, with the superstratum 32 secured in place in the recess 36 by any suitable means such as the attachment devices listed above. What is important in this, as in all other embodiments, is that the superstratum 32 be appropriate for an animal to use in its customary bedding-down behaviour, and yet retain its overall shape to a sufficient degree to provide the resting animal optimal orthopaedic support in combination with the base layer.

The embodiment 30 of Figs. 2 and 2A is illustrated as not having an outer casing; nonetheless, such a casing could if desired be provided within the scope of the invention. (It should be noted that while this embodiment is shown as having the upper exposed surface of the superstratum 32 even with the uppermost part of the base layer 34, this relation is not essential and instead the exposed surface of the superstratum 32 could be set below the top of the base layer 34 or in other variants could be allowed to rise above the top of that layer.)

It will be apparent that any desired shape can be given to a cushion constructed according to the present invention. In particular, the cushion need not be rectangular, but can be circular, oval, irregular or indeed of any arbitrary shape whatever. Also, while the base layer and the superstratum are each shown as being roughly uniform in thickness, this is not necessary, as long as the properties of the two layers are as described above. That is, the superstratum must permit the animal to bed down as it wishes, and the base layer must provide such support to the superstratum (normally by being held together therewith) as will limit the extent to which the animal can disturb the shape of the superstratum, so that the animal enjoys even support when resting.

Also, while preferred materials for use in practicing the present invention have been given above, many other materials are suitable for that purpose. In particular, while the superstratum has been described as having an outer covering containing loosely-packed fill of a fibrous or solid material, it is not essential that the content of the superstratum be of a fibrous, granular or particulate nature, as long as the superstratum as a whole has the described properties.

Also, while the base layer has been described as also having an outer covering containing densely-packed fill of a firmer type, other constructions are also possible, including the use of a single block of an appropriate cushioning material such as a synthetic foam, or a set of several such blocks stacked to fill the interior of a cover. Also, it is within the scope of this invention to provide the base layer with a frame of a rigid material located around all or part of the periphery of the cushion.

The present invention has been described in detail with reference to the preferred embodiments thereof. Many modifications and variations thereof will now be apparent to those of ordinary skill in the art, however, and the scope of the invention is not to be limited by the details illustratively described herein, but only by the terms of the appended claims.

## Claims

1. A cushion (10) for use by an animal, comprising a superstratum (12), having an exposed surface for the animal to lie on, and having such a construction that the animal can disturb the shape of said superstratum by stepping, pawing, circling or lying on said exposed surface; characterised in that a base layer (14) is provided to support said superstratum (12) in such fashion as to limit the degree to which said shape of said superstratum (12) can be disturbed by the animal, and in that first and second covers (12a, 14a) encase said superstratum (12) and said base layer (14) respectively.

2. A cushion (10) according to claim 1, further comprising an outer casing (16) containing said superstratum (12), said base layer (14) and said respective covers (12a, 14a).

3. A cushion (10) according to claim 2, wherein said outer casing (16) comprises a removable cover, which can be removed from said cushion, for cleaning and be replaced thereafter.

4. A cushion (30) according to claim 1, wherein said base layer (34) has an upper surface in which is defined a recess (36), and wherein said superstratum (32) is received in said recess (36).

5. A cushion according to claim 1, wherein said base layer (14) comprises a firm cushioning element as means by which said base layer retains its shape.

6. A cushion according to claim 5, wherein said cushioning element is made of a synthetic foam (14b).

7. A cushion according to claim 5, wherein said superstratum (12) further comprises a cover and loosely-packed fill (12b) contained in said cover.

## Patentansprüche

1. Kissen (10) zur Benutzung durch ein Tier, bestehend aus einer Oberschicht (12) mit einer exponierten Oberfläche, auf der das Tier liegen kann und das einen solchen Aufbau hat, daß das Tier die Form besagter Oberschicht durch Treten, Scharren, Kreisen oder Liegen auf der exponierten Oberfläche verändern kann, dadurch gekennzeichnet, daß eine Grundschicht (14) vorgesehen ist, welche besagte Oberschicht (12) in einer solchen Weise trägt, daß das Ausmaß begrenzt wird, bis zu welchem das Tier besagte Form besagter Oberschicht (12) verändern kann, und dadurch, daß erste und zweite Hülle (12a, 14a) die besagte Oberschicht (12) beziehungsweise die besagte Unterschicht (14) ummanteln.

2. Kissen (10) nach Anspruch 1, das weiter einen äußeren Bezug (16) umfaßt, der die besagte Oberschicht (12), die besagte Grundschicht (14) und die entsprechenden Hüllen (12a, 14a) aufnimmt.

3. Kissen (10) nach Anspruch 2, wobei besagter äußerer Bezug (16) aus einer abnehmbaren Hülle besteht, die zur Reinigung von besagtem Lager abgenommen und danach wieder angebracht werden kann.

4. Kissen (30) nach Anspruch 1, wobei die Grundschicht (34) eine obere Oberfläche aufweist, in der eine Aussparung (36) abgegrenzt ist, und wobei die besagte Aussparung (36) die besagte Oberschicht (32) aufnimmt.

5. Kissen nach Anspruch 1, wobei besagte Grundschicht (14) ein steifes Kissenelement als ein Mittel beinhaltet, durch welches die besagte Grundschicht ihre Form beibehält.

6. Kissen nach Anspruch 5, wobei besagtes Lagerelement aus synthetischem Schaumstoff (14b) hergestellt ist.

7. Kissen nach Anspruch 5, wobei besagte Oberschicht (12) weiterhin aus einer Hülle und einer lose gepackten Füllung (12b) in besagter Hülle besteht.

## Revendications

1. Coussin (10) devant être utilisé par un animal, comportant une nappe supérieure (12) pourvue d'une surface exposée sur laquelle l'animal peut se reposer et présentant une construction telle que l'animal puisse déranger la forme de la dite nappe supérieure en piétinant la dite surface exposée ou en effectuant des mouvements circulaires ou en se couchant sur celle-ci ; caractérisé par le fait qu'une nappe inférieure (14) est prévue dans le but de soutenir la dite nappe supérieure (12) de manière à limiter l'effet de dérangement que les animaux peuvent exercer sur la forme de la dite nappe supérieure (12), et par le fait qu'une première et une deuxième enveloppes (12a, 14a) enferment respectivement la nappe supérieure (12) et la nappe inférieure (14).

2. Coussin (10) selon la revendication 1 comportant en outre une enveloppe extérieure (16) contenant la dite nappe supérieure (12), la dite nappe inférieure (14), et les dites enveloppes respectives (12a, 14a).

3. Coussin (10) selon la revendication 2 dans lequel la dite enveloppe extérieure (16) est pourvue d'une taie amovible qui peut être ôtée du dit coussin pour les besoins du nettoyage et qui peut être remise en place par la suite.

4. Coussin (10) selon la revendication 1 où la dite nappe inférieure (34) possède une surface supérieure sur laquelle est défini un évidement (34), et où la dite nappe supérieure (32)* est reçue dans le dit évidement (36).

5. Coussin selon la revendication 1 où la dite nappe inférieure (14) contient un rembourrage ferme afin que la dite nappe inférieure puisse conserver sa forme.

6. Coussin selon la revendication 5 où le rembourrage est fabriqué en mousse synthétique (14b).

7. Coussin selon la revendication 5 où la dite nappe supérieure (12) comporte une enveloppe ainsi qu'une garniture lâche (12b) contenue à l'intérieure de la dite enveloppe.
